# EUROPEAN PATENT APPLICATION

(11) **EP 0 902 058 A2**
(43) Date of publication of application: **17.03.1999**
(21) Application number: 98307156.4
(22) Date of filing: 04.09.1998
(51) Int. Cl.: C08L 83/04

(54) **Curable organosiloxane compositions and sealants or elastomers therefrom**

(30) Priority: 09.09.1997 US 926107
(71) Applicant: DOW CORNING CORPORATION, Midland, Michigan 48686-0994 (US)
(72) Inventor: Alvarez, Khristopher Edward, Midland, Michigan 48642 (US); Norris, Ann Walstrom, Midland, Michigan 48642 (US); Watson, Michael John, Midland, Michigan 48642 (US)
(74) Representative: Kyle, Diana

(57) **Abstract**

A curable composition is described which contains an alkenyl group containing polyorganosiloxane, an organosilicon compound having two silicon-bonded hydrogen atoms, a hydrosilylation reaction catalyst, and a glass frit. Said composition is suitable, upon cure, as a firewall sealant in building, automotive and aviation constructions.

## Description

This invention relates to organosiloxane compositions that are curable to form organosiloxane elastomers which are useful as firewall sealants.

The prior art describes such organosiloxane compositions which are made by the reaction of polyorganosiloxanes containing at least two alkenyl groups per molecule with organosilicon compounds containing at least two silicon-bonded hydrogen atoms per molecule as the crosslinker. This reaction is typically catalyzed by platinum group metal compounds. The reactive ingredients of these compositions are typically also packaged in two containers with the crosslinker in one container and the hydrosilylation reaction catalyst in another container. The curing reaction conveniently occurs when the contents of the two containers are mixed.

U.S. Patent 2,684,349 discloses a composition comprising a heat-convertible organopolysiloxane, in which the organic groups are alkyl, aryl, aralkyl or halogenated aryl radicals and at least 5% of a glass frit filler. We have found that organosiloxane compositions containing glass frits and certain polyorganosiloxanes, having an average of at least two organic groups which are alkenyl groups, yield elastomers having unexpectedly improved fire resistance properties. The compositions of this invention are useful in sealing firewall constructions to prevent the passage of flames, air and harmful vapors.

The present invention is based on our finding that adding a glass frit to an organosiloxane composition curable by a hydrosilylation reaction unexpectedly improves the ability of the resulting sealant to maintain its physical integrity and adhesion to various substrates despite subsequent exposure to high temperature flames for an extended time. The present invention is a hydrosilylation reaction curable organosiloxane composition comprising:
A) 100 parts by weight of a polyorganosiloxane having an average of at least two silicon-bonded alkenyl groups per molecule;
B) an organosilicon compound having an average of at least two silicon-bonded hydrogen atoms per molecule;
C) a hydrosilylation reaction catalyst, wherein the concentration of said catalyst is sufficient to promote curing of said organosiloxane composition; and
D) at least 20 parts by weight, per 100 parts by weight of Component (A), of a glass frit; wherein the sum of the average number of silicon-bonded alkenyl groups per molecule in Component (A) and the average number of silicon-bonded hydrogen atoms per molecule in Component (B) is greater than 4.

Component (A) herein is a polyorganosiloxane containing an average of at least two alkenyl groups per molecule. It is a major component of the curable composition of the present invention. For our composition to properly crosslink, Component (A) must contain an average of at least two alkenyl groups per molecule. In preferred embodiments, Component (A) contains alkenyl groups having from 2 to 12 carbon atoms. Preferred alkenyl groups are represented by the formula -R¹CH=CH₂, where R¹ represents a single bond or an alkylene group containing from 2 to 10 carbon atoms. The alkylene group can be linear or branched. Examples of preferred alkenyl groups include vinyl, 2-propenyl, 3-butenyl, 5-hexenyl, 7-octenyl and 10-undecenyl. More preferred alkenyl groups are vinyl and hexenyl. In preferred embodiments, at least one alkenyl group is located at a terminal of the molecular chain. In more preferred embodiments, at least two alkenyl groups are located at the terminals of said chain.

In preferred embodiments, Component (A) is represented by the general formula: 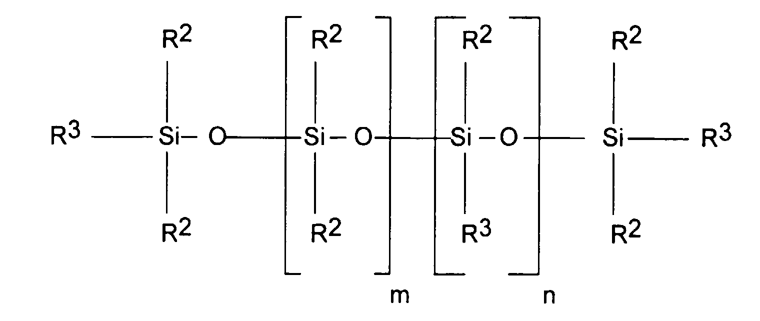 In this formula, each R² is individually selected from unsubstituted or substituted monovalent hydrocarbon groups containing from 1 to 20 carbon atoms; R³ is R² or an alkenyl group; m ≥ 0; and the value of n is selected such that Component (A) has an average of at least two alkenyl groups per molecule. Preferred alkenyl groups for said formula are vinyl and hexenyl. Preferably, R² is an unsubstituted monovalent hydrocarbon group having less than 7 carbon atoms or a halogenated alkyl group having less than 7 carbon atoms. More preferably R² is alkyl group, such as methyl or ethyl; a cycloalkyl group such as cyclohexyl; an aryl group such as phenyl; or a halogenated alkyl group such as chloromethyl, 3-chloropropyl or 3,3,3-trifluoropropyl. Most preferably, R² is methyl. In preferred embodiments, n is zero.

Generally, the siloxane is polymerized to a viscosity of from 0.03 to 500 Pa·s at 25°C., preferably from 2 to 250 Pa·s. It is possible to use either higher or lower viscosity polymers.

The polyorganosiloxane of this invention is a homopolymer or a copolymer. A single polyorganosiloxane or a mixture of different polyorganosiloxanes can be used herein.

Methods for preparing the polyorganosiloxanes of Component (A) are sufficiently disclosed in patents and other literature such that a detailed description herein is not necessary.

Component (B) of our invention is an organohydrogensiloxane containing an average of at least two silicon-bonded hydrogen atoms per molecule. It is used to crosslink our claimed composition. The silicon-bonded hydrogen atoms of Component (B) readily react with the alkenyl groups of Component (A) to cure said composition. For the composition of this invention to cure to a silicone elastomer, the sum of the average number of silicon-bonded alkenyl groups per molecule in Component (A) and the average number of silicon-bonded hydrogen atoms per molecule in Component (B) must be greater than 4.

Organohydrogensiloxanes that are used as Component (B) preferably contain an average of more than two silicon-bonded hydrogen atoms per molecule, and more preferably contain an average of at least three silicon-bonded hydrogen atoms per molecule. The remaining valances on the silicon atoms are satisfied with organic groups selected from alkyl groups having less than 7 carbon atoms, halogenated alkyl groups having less than 7 carbon atoms and aryl groups. The preferred aryl group is phenyl. Preferred alkyl groups are methyl, ethyl, and hexyl. Most preferred alkyl groups are methyl groups. The preferred halogenated alkyl group herein is 3,3,3-trifluoropropyl.

The organohydrogensiloxane of Component (B) can have a linear or branched structure, and can also be a homopolymer, a copolymer or a mixture of these polymers.

Polymers that are suitable as Component (B) are polymethylhydrogensiloxane, trimethylsiloxy-terminated polymethylhydrogensiloxane, copolymers of dimethylsiloxane, methylhydrogensiloxane and trimethylsiloxane units and copolymers of dimethylsiloxane, methylhydrogensiloxane and dimethylhydrogensiloxane units.

A preferred linear organohydrogensiloxane herein has a viscosity of from 0.01 to 10 Pa·s at 25°C. and comprises dialkylsiloxane and alkylhydrogensiloxane units with trialkylsiloxy terminal units. The alkyl groups therein contain from 1 to 4 carbon atoms and are most preferably methyl.

The amount of Component (B) used in our curable composition is that sufficient to provide the desired degree of crosslinking during cure. Normally, the proportion of Component (B) in our composition is an amount ranging from 0.5 to 40 parts by weight, per 100 parts of Component (A). In preferred embodiments, Component (B) is present in an amount ranging from 0.5 to 10 parts, per 100 parts of Component (A). In more preferred embodiments, Component (B) ranges from 0.5 to 2 parts, per 100 parts of Component (A).

The molar ratio of silicon-bonded hydrogen atoms to vinyl or to other ethylenically unsaturated hydrocarbon groups in our compositions is important with respect to the ultimate properties of the cured elastomer. The optimum molar ratio for these curable compositions are determined, at least in part, by the molecular weight of the polyorganosiloxane (A) and the crosslinking agent (B). The relative concentration of organohydrogensiloxane (Component (B)) and polyorganosiloxane (Component (A)) in our claimed curable composition is equivalent to a molar ratio of silicon-bonded hydrogen atoms to alkenyl radicals that ranges from 0.3:1 to 2:1, preferably from 1:1 to 2:1.

Component (C) is a metal from the platinum group of the periodic table or a compound of such a metal. These metals include platinum, palladium and rhodium. Platinum and platinum compounds are preferred herein based on the high activity level of these catalysts in hydrosilylation reactions. Catalysts that are normally employed as Component (C) in our organosiloxane compositions are any of the known forms which are effective in promoting the reaction of -SiH groups with silicon-bonded alkenyl groups.

Suitable forms of platinum include chloroplatinic acid, platinum compounds and complexes of platinum compounds with unsaturated organic compounds or with siloxanes having silicon-bonded groups containing ethylenically unsaturated groups. Additional examples of suitable platinum catalysts include complexes of platinous halides or chloroplatinic acid with divinyltetramethyldisiloxane and tetramethyldisiloxane. Such platinum catalysts are more completely described in U.S. Patent 3,419,593, which generally describes and teaches about the preparation of such catalysts.

The concentration of Component (C) in our composition is equivalent to a concentration of platinum group metal from 0.1 to 10,000 parts by weight of said metal, preferably from 1000 to 10,000 parts by weight of said metal, and more preferably 2500 to 7500 parts by weight of this metal, per million parts (ppm), based on the combined weights of Components (A) and (B).

Component (D) of this invention is a glass frit, preferably a borosilicate frit. The more preferred frit is a calcium borosilicate frit. In addition to B₂0₃, SiO₂ and CaO, the preferred calcium borosilicate frit of this invention may contain minor amounts, not to exceed 20%, of Al₂O₃, MgO, LiO, K₂O, Na₂O, BaO, ZnO or ZrO₂. The most preferred calcium borosilicate frit contains at least 40% by weight of CaO, 20% by weight of B₂0₃, and at least 20% by weight of SiO₂. In preferred embodiments, the present invention contains a glass frit having a flow fusion point of at least 1750°F (954°C).

The preparation of glass frits is well known and consists, for example, of melting together the constituents of the desired glass in the form of oxides, and then pouring said molten composition into water to form a frit. The frit produced by this method is then milled to reduce the particle size of the frit and to obtain a frit of more uniform size.

In preferred embodiments, the compositions of the present invention contain at least 20 weight % of glass frit based on the total weight of the composition. More preferably, the compositions contain 20 to 50 weight % glass frit. Most preferably, our compositions contain from 20 to 40 weight % of glass frit.

Compositions of this invention may contain additional ingredients to modify the properties of the curable compositions or of cured materials prepared from said compositions. These additional ingredients include liquid diluents, reinforcing fillers such as finely divided silica of the fumed or precipitated type, non-reinforcing fillers such as quartz or calcium carbonate, surfactants, stabilizers to inhibit degradation in the presence of heat and/or ultraviolet light, dyes, pigments, working time extenders and flame retardants. Non-reactive polyorganosiloxanes are a preferred class of diluents used herein. The preferred non-reactive polyorganosiloxane diluent is trimethylsiloxy-terminated dimethylsiloxane. Compositions of the present invention may also contain small amounts of water.

In preferred embodiments, the composition of our invention also contains titanium dioxide, propyl orthosilicate and an adhesion promoter.

The curable compositions of this invention are prepared by blending all of the components together. Curing typically begins when Component (A) is mixed with Component (B) in the presence of a hydrosilylation reaction catalyst Component (C). Complete cure requires from several minutes to several hours, depending upon, among other things, the type and concentration of crosslinker and catalyst. The cure of the composition can be accelerated by heating the curable composition.

When our claimed composition is in the form of a multi-part system, the composition is prepared by preparing a Part A and a Part B and by then mixing Part A with Part B. Curing begins when Part A and Part B are mixed. When said compositions are so prepared, the mix ratio can vary depending upon the formulation of each part from 1:1 to 40: 1, parts of base per parts of curing agent. Typical mix ratios are 1:1, 10:1 and 20:1.

The present invention also relates to a multi-part system comprising:
A) 100 parts by weight of a polyorganosiloxane having an average of at least two silicon-bonded alkenyl groups per molecule;
B) an organosilicon compound having an average of at least two silicon-bonded hydrogen atoms per molecule;
C) a hydrosilylation reaction catalyst, in an amount sufficient to accelerate the curing of the organosiloxane composition; and
D) at least 20 parts by weight, per 100 parts by weight of Component (A), of a glass frit; wherein the sum of the average number of silicon-bonded alkenyl groups per molecule in Component (A) and the average number of silicon-bonded hydrogen atoms per molecule in Component (B)is greater than 4; with the proviso that Component (B) and Component (C) are packaged in different parts.

The part which contains Component (A) is typically referred to as Part A (base). The part which contains Component (B) is typically referred to as Part B (curing agent). Components (C) and (D), and any optional components, may be contained in either Part A or Part B; or in both Part A and Part B.

Sealants and elastomers prepared from the claimed compositions herein are suitable for use as sealants in firewall constructions, particularly those used on airplanes.

The following examples describe and demonstrate preferred curable compositions of the present invention.

Unless otherwise indicated, all parts and percentages in the examples are by weight and the viscosities are the values measured at 25°C.

For Comparative Examples 1 - 5 and Examples 1 - 3, a silicone sealant was formulated by first preparing an organosiloxane composition. Each composition was prepared by admixing 10 parts of Part A and 10 parts of Part B. Each Part A and Part B were prepared by admixing the listed components of the example.

For Comparative Example 1 and Examples 1 and 2, the self extinguishing, burn through and physical integrity of each composition was evaluated by first curing each composition for 30 minutes at 150°C. Test specimens were then prepared as follows. A 2 by 4 by 1/4 inch (2.25 x 10.2 x 0.64 cm) sample of the composition was cured on the face of a 6 by 6 by 1/4 inch (15.2 x 15.2 x 0.64 cm) stainless steel plate. The plate had a 3.5 by 1/4 inch (8.9 x 0.64 cm) slot in the center.

For Comparative Examples 2 - 5 and Example 3, the self extinguishing, burn through and physical integrity of each composition was evaluated by first curing each composition for 30 minutes at 150°C. Test specimens were next prepared as follows. Part A and Part B were mixed using a static mixer and dispensed onto the face of a 6 by 6 by 1/4 inch (15.2 x 15.2 x 0.64 cm) stainless steel plate with a 3.5 by 1/4 inch (8.9 x 0.64 cm) slot in the center of the plate. A sample of the composition was drawn over the plate with a die and cured. The die had a half circle cut out of a diameter of 0.75 inch (1.9 cm) and a depth of 0.25 inch (0.64 cm). The sample was cured for 2 days at room temperature.

For each of the Comparative Examples and the Examples, the stainless steel plate was adjustably secured 2 inches (5.01 cm) above a bunsen burner, with the face of the plate containing the cured composition positioned at a 45° angle to the flame source. A flame was applied to the cured composition for 15 seconds and then pulled away. The distance between the flame and the face of the plate was adjusted so the surface temperature of the cured composition reached at least 2000°F. (1093.3°C.). The flame was subsequently reapplied to the cured composition for an additional 15 minutes. The cured composition was finally evaluated, via visual inspection, for burn-through, physical integrity and adhesion to the stainless steel plate. The self extinguishing time was also recorded. The results are reported on Table I.

### Comparative Example 1

### Part A

79.2 parts of dimethlyvinylsiloxy-terminated dimethylsiloxane with a viscosity of 55,000 mm²/s.

14.9 parts of a hexamethyldisilazane treated filler.

5 parts of dimethylhexenylsiloxy-terminated dimethylsiloxane-methylhexenylsiloxane copolymer having a viscosity of 420 mm²/s.

0.3 part of a chloroplatinicacid complex of divinyltetramethyldisiloxane diluted with dimethylvinylsiloxy-endblocked polydimethylsiloxane to provide 0.65 weight percent of platinum metal.

0.2 part of tetrabutyltitanate.

0.2 part of a mixture of 89 weight % of titanium dioxide, 5 weight % of amorphous silica and 5 weight % of alumina hydrate.

0.15 part of trimethylolpropane dially ether.

0.04 part of a mixture of 60% by weight of trimethylsiloxy-terminated dimethylsiloxane and 40% by weight of carbon black.

### Part B

94.9 parts of a mixture comprising 79.8 weight % of dimethlyvinylsiloxy-terminated dimethylsiloxane with a viscosity of 55,000 mm²/s; 15 weight % of a hexamethyldisilazane treated filler; 5 weight % of dimethylhexenylsiloxy-terminated dimethylsiloxane-methylhexenylsiloxane copolymer having a viscosity of 420 mm²/s; and 0.2 weight % of a mixture of 89 weight % of titanium dioxide, 5 weight % of amorphous silica and 5 weight % of alumina hydrate.

2.35 parts of tetrapropyl othosilicate.

2.25 parts of a trimethylsiloxy-terminated polydiorganosiloxane, having an average of five methylhydrogensiloxane units and three dimethylsiloxane units per molecule, with a silicon-bonded hydrogen atom content of 0.75 weight percent.

0.5 part of glycidoxypropyltrimethoxysilane.

0.02 part of a mixture containing 97% by weight of dimethylvinylsiloxy-terminated dimethylsiloxane-methylvinylsiloxane copolymer and 3% by weight of ethynyl cyclohexanol.

### Comparative Example 2

### Part A

78.1 parts of a mixture comprising 79.8 weight % of dimethlyvinylsiloxy-terminated dimethylsiloxane with a viscosity of 55,000 mm²/s; 15 weight % of a hexamethyldisilazane treated filler; 5 weight % of dimethylhexenylsiloxy-terminated dimethylsiloxane-methylhexenylsiloxane copolymer having a viscosity of 420 mm²/s; and 0.2 weight % of a mixture of 89 weight % of titanium dioxide, 5 weight % of amorphous silica and 5 weight % of alumina hydrate.

20 parts of alumina trihydrate.

0.9 part of a chloroplatinic acid complex of divinyltetramethyldisiloxane diluted with dimethylvinylsiloxy-endblocked polydimethylsiloxane to provide 0.65 weight percent of platinum metal.

1 part of fumed silica having a BET surface area of 90 m²/g.

### Part B

78.9 parts of a mixture comprising 79.8 weight % of dimethlyvinylsiloxy-terminated dimethylsiloxane with a viscosity of 55,000 mm²/s; 15 weight % of a hexamethyldisilazane treated filler; 5 weight % of dimethylhexenylsiloxy-terminated dimethylsiloxane-methylhexenylsiloxane copolymer having a viscosity of 420 mm²/s; and 0.2 weight % of a mixture of 89 weight % of titanium dioxide, 5 weight % of amorphous silica and 5 weight % of alumina hydrate.

20 parts of alumina trihydrate.

1 part of fumed silica having a surface area of 90 m²/g.

0.03 part of ethynyl cyclohexanol.

### Comparative Example 3

### Part A

10 parts of Part A of Comparative Example 1.

2 parts of Mg(OH)_{2.}

### Part B

10 parts of Part B of Comparative Example 1.

### Comparative Example 4

### Part A

100 parts of Part A of Comparative Example 1.

### Part B

79 parts of a mixture comprising 79.8 weight % of dimethylvinylsiloxy-terminated dimethylsiloxane with a viscosity of 55,000 mm²/s; 15 weight % of a hexamethyldisilazane treated filler; 5 weight % of dimethylhexenylsiloxy-terminated dimethylsiloxane-methylhexenylsiloxane copolymer having a viscosity of 420 mm²/s; and 0.2 weight % of a mixture of 89 weight % of titanium dioxide, 5 weight % of amorphous silica and 5 weight % of alumina hydrate.

1 part of fumed silica having a surface area of 90 m²/g.

20 parts of Mg(OH)_{2.}

0.03 part of ethynyl cyclohexanol.

### Comparative Example 5

### Part A

78.1 parts of Part A of Comparative Example 1.

20 parts of Al₂(SO₄)₃-n(H₂O) where n is 12-14.

1 part of fumed silica having a surface area of 90 m²/g.

0.9 part of a chloroplatinicacid complex of divinyltetramethyldisiloxane diluted with dimethylvinylsiloxy-endblocked polydimethylsiloxane to provide 0.65 weight percent of platinum metal.

### Part B

79 Parts of Part B of Comparative Example 1.

20 parts of Al₂(SO₄)₃-n(H₂O) where n is 12-14.

1 part of fumed silica having a surface area of 90 m²/g.

0.03 part of ethynyl cyclohexanol.

### Example 1

### Part A

6 parts of Part A of Comparative Example 1.

4 parts of a calcium borosilicate glass having a flow fusion temperature of 1750°F. (954°C.) and containing 28.2 weight % of B₂0₃, 26.8 weight % of SiO₂ and 45 weight % of CaO.

### Part B

10 parts of Part B of Comparative Example 1.

### Example 2

### Part A

6 parts of Part A of Comparative Example 1.

4 parts of a calcium borosilicate glass containing 30.3 weight % of B₂O₃, 43.3 weight % of SiO₂, 13.8 weight % of Al₂O₃ and 4.1 weight % CaO.

### Part B

10 parts of Part B of Comparative Example 1.

### Example 3

### Part A

58.1 parts of Part A of Comparative Example 1.

40 parts of a calcium borosilicate glass having a flow fusion temperature of 1750°F (954°C) and containing 28.2 weight % of B₂0₃, 26.8 weight % of SiO₂ and 45 weight % of CaO.

1 part of fumed silica having a surface area of 90 m²/g.

0.9 part of a chloroplatinicacid complex of divinyltetramethyldisiloxane diluted with dimethylvinylsiloxy-endblocked polydimethylsiloxane to provide 0.65 weight percent of platinum metal.

### Part B

58.7 parts of Part B of Comparative Example 1.

40 parts of a calcium borosilicate glass having a flow fusion temperature of 1750°F. (954°C.) and containing 28.2 weight % of B₂O₃, 26.8 weight % of SiO₂ and 45 weight % of CaO.

1 part of fumed silica having a surface area of 90 m²/g.

0.03 part of ethynyl cyclohexanol.

**Table I**

| | Self Extinguish after 15 seconds | Self Extinguish After 15 minutes | Burn Through | Maintained Adhesion & Integrity |
|---|---|---|---|---|
| Example 1 | Yes | Yes | No | Yes |
| Example 2 | Yes | Yes, after 2.5 min. | No | Yes |
| Example 3 | Yes | Yes | No | Yes |
| Comp. Ex. 1 | Yes | Yes, after 2 min. | Yes | Yes |
| Comp. Ex. 2 | Yes | Yes | No | No |
| Comp. Ex. 3 | Yes | Yes, after 20 seconds | No | No |
| Comp. Ex. 4 | Yes | Yes, after 10 seconds | No | No |
| Comp. Ex. 5 | Yes | Yes | No | No |

## Claims

1. A curable organosiloxane composition comprising:
A) 100 parts by weight of a polyorganosiloxane having an average of at least two silicon-bonded alkenyl groups per molecule;
B) an organosilicon compound having an average of at least two silicon-bonded hydrogen atoms per molecule;
C) a hydrosilylation reaction catalyst, in an amount sufficient to accelerate the curing of said organosiloxane composition; and
D) at least 20 parts by weight per 100 parts by weight of Component (A), of a glass frit; wherein the sum of the average number of silicon-bonded alkenyl groups per molecule in Component (A) and the average number of silicon-bonded hydrogen atoms per molecule in Component (B) is greater than 4.

2. The composition of claim 1 wherein Component (B) is present in an amount from 0.5 to 40 parts by weight per 100 parts by weight of Component (A).

3. The composition of claim 1 or 2, wherein the molar ratio of silicon-bonded hydrogen atoms in Component (B) to silicon-bonded alkenyl groups in Component (A) is 0.3:1 to 2:1.

4. The composition of any of claims 1 to 3, wherein component (C) is present in an amount of from 0.1 to 10,000 parts by weight of platinum group metal, per million parts of the combined weights of Components (A) and (B).

5. The composition of any of claims 1 to 4, wherein Component (D) comprises at least 20 weight % of the total composition.

6. The composition of any of claims 1 to 5, wherein Component (D) is a borosilicate frit.

7. The composition of any of claims 1 to 6, wherein the flow fusion temperature of component (D) is at least 1750°F. (954°C.).

8. A multi-part system comprising:
a curable organosiloxane composition according to any of claims 1 to 7 with the proviso that Component (B) and Component (C) are in different parts.
